# EUROPÄISCHE PATENTSCHRIFT

(11) **EP 3 290 476 B1**
(45) Veröffentlichungstag und Bekanntmachung des Hinweises auf die Patenterteilung: **30.10.2024**
(21) Anmeldenummer: 16187333.6
(22) Anmeldetag: 06.09.2016
(51) Int. Cl.: C08L 67/02, C08F 220/18, C08L 23/08, C08L 63/00, C08K 5/1515

(54) **POLYALKYLENTEREPHTHALAT ZUSAMMENSETZUNGEN**
POLYALKYLENE TEREPHTHALATE COMPOSITIONS
COMPOSITIONS DE POLYALKYLÈNETÉRÉPHTALATE

(43) Veröffentlichungstag der Anmeldung: 07.03.2018
(73) Patentinhaber: Envalior Deutschland GmbH, 40474 Düsseldorf (DE)
(72) Erfinder: NEUWALD, Boris, 40474 DÜSSELDORF (DE); BIENMÜLLER, Matthias, 40474 DÜSSELDORF (DE)
(74) Vertreter: Envalior Association

(56) Entgegenhaltungen:
- EP-A2- 1 992 662
- WO-A1-2007/147490
- WO-A1-2015/195143
- US-A1- 2014 275 346

## Beschreibung

Die Erfindung betrifft neue, gegebenenfalls verstärkte Zusammensetzungen auf Basis von a) Polyalkylenterephthalaten, vorzugsweise Polybutylenterephthalat, b) mindestens einem Copolymerisat aus mindestens einem Olefin und mindestens einem (Meth)acrylsäureester eines aliphatischen Alkohols, sowie c) mindestens einem Additiv auf Basis von Molekülen mit 2 oder mehr Epoxid-, Anhydrid- oder Carbodiimid-Gruppen pro Molekül, daraus herzustellende Formmassen sowie wiederum aus den Formmassen herzustellende hydrolysestabile Erzeugnisse mit guten Oberflächen und gleichzeitig guten mechanischen Eigenschaften.

Polyalkylenterephthalate zeichnen sich im Allgemeinen durch gute Verarbeitbarkeit, gute mechanische Eigenschaften, Temperaturstabilität und chemische Stabilität aus. Sie werden in zahlreichen Anwendungen eingesetzt, vorzugsweise im Spritzguss, für die Folienherstellung, oder für die Faserherstellung. Bevorzugte Erzeugnisse auf Basis von Polyalkylenterephthalaten sind Schalter, Gehäuse, Stecker, Sensoren und weitere Anwendungen aus dem Elektrik- und Elektronikbereich.

Wichtig für Polyalkylenterephthalate in den o. g. Anwendungen ist eine problemlose Verarbeitung, insbesondere im Hinblick auf Heißkanalsysteme und eine möglichst hohe Schmelzstabilität bei erhöhten Temperaturen, wobei der Fachmann unter erhöhten Temperaturen solche im Bereich >260°C, jedoch unterhalb der Zersetzungstemperatur versteht.

Die Schmelzstabilität beschreibt dabei die Veränderung der Schmelzviskosität bei erhöhten Temperaturen über die Zeit. Bei einem nicht additivierten Polyalkylenterephthalat nimmt die Schmelzviskosität mit der Zeit ab. Durch reaktive, kettenverlängernde Additive, wie z. B. Moleküle die zwei oder mehr Epoxid Gruppen enthalten, kann sich die Schmelzviskosität aber auch erhöhen. Dies ist unvorteilhaft, da das Fließvermögen der Schmelze abnimmt, was unter Anderem zu geringeren Verarbeitungsgeschwindigkeiten führen kann. Weiterhin kann ein Aufbau der Schmelzviskosität zu Stippen oder zu einer Verfestigung der Spritzgussmasse in der beim Spritzguss einzusetzenden Düse, oder zu Verstopfungen bzw. Verschlüssen im Angusssytem (Heißkanal) einer Spritzgießanlage führen. Als Formmassen mit hoher Schmelzestabilität werden deshalb im Folgenden solche bezeichnet, die auch nach Verweilzeiten > 5 min deutlich oberhalb des Schmelzpunktes der Formmasse, vorzugsweise>260°C, keinen Aufbau der Schmelzviskosität zeigen. Für solche schmelzestabile Formmassen ist - wie dem Fachmann bekannt - bei der Verarbeitung üblicherweise eine leichte Verringerung der Schmelzeviskosität zu beobachten.

Gemäß https://de.wikipedia.org/wiki/Stippe_(Kunststoff) ist eine Stippe ein Oberflächenfehler an einem Spritzgussteil. Im Rahmen der vorliegenden Erfindung werden die organischen Stippen betrachtet, die aus vercracktem, d. h. thermisch zersetztem Polymer bestehen.

Die nicht-Erhöhung der Schmelzviskosität während der Verarbeitung einer Formmasse trägt also zur Verringerung von Stippen und zur Verbesserung der Oberflächenqualität bei und reduziert so den Ausschuss im Spritzgussprozess.

Der Einsatz von Additiven mit 2 oder mehr Epoxid-, Anhydrid- oder Carbodiimid-Gruppen führt in Formmassen im Allgemeinen zu einer Erniedrigung der Fließfähigkeit durch Erhöhung der Schmelzviskosität. Zudem kann es bei erhöhten Temperaturen zu einem Aufbau der Schmelzviskosität während der Verarbeitung kommen, was zu großen Problemen in der Verarbeitung führt.

WO2014/035472 A1 zeigt, dass Polyester Mischungen, die z. B. epoxidische Stabilisatoren enthaltenden, bei hohen Temperaturen zum Viskositätsaufbau neigen. Der Zusatz von Hydroxyapatit zu Polyestermischungen mit Additiven die reaktive Komponenten (mit zwei oder mehr Epoxid-Funktionalitäten pro Molekül) enthalten, führt zu einer Erhöhung der Schmelzstabilität. Allerdings wird in WO2014/035472 A1 bewusst eine kettenabbauende mineralische Substanz zugesetzt, die unter ungünstigen Bedingungen auch zum übermäßigen Abbau der Polymerketten und damit zum Verlust von mechanischen Eigenschaften im Enderzeugnis führen kann. Dies erschwert den korrekten Einsatz in der Praxis ganz erheblich.

EP 1 992 662 A2 offenbart Formmassen auf Basis eines thermoplastischen Polyesters und mindestens eines Copolymerisats aus mindestens einem α-Olefin mit mindestens einem Methacrylsäureester eines aliphatischen Alkohols, wobei der MFI (Melt Flow Index) des Copolymerisats 100 g/10 min nicht unterschreitet.

Die Aufgabe dieser Erfindung bestand darin, Polyalkylenterephthalat-Mischungen in Form erfindungsgemäßer Zusammensetzungen und Formmassen mit hoher Schmelzstabilität unter Verarbeitungsbedingungen bereit zu stellen, die keinen Aufbau der Schmelzviskosität im Rahmen der, oder infolge der Verarbeitung zeigen. Gleichzeitig sollen die erfindungsgemäßen Formmassen eine niedrige Schmelzviskosität, ein gutes Fließverhalten bei ihrer Verarbeitung und die daraus zu fertigenden Erzeugnisse eine hohe Hydrolysebeständigkeit zeigen, die durch Zugabe eines Fließmittels nicht abnimmt. Die Lösung der Aufgabe und Gegenstand der vorliegenden Erfindung sind Zusammensetzungen, Formmassen und Erzeugnisse enthaltend
a) wenigstens ein Polyalkylenterephthalat,
b) wenigstens ein Copolymerisat aus mindestens einem Olefin und mindestens einem Acrylsäureester oder Methacrylsäureester eines aliphatischen Alkohols, wobei der nach ISO 1133 zu bestimmende Melt-Flow-Index (MFI) des Copolymerisats 50 g /10 min, bevorzugt 150 g /10 min, nicht unterschreitet und dieser bei 190°C und einem Prüfgewicht von 2.16kg gemessen bzw. bestimmt wird, und
c) wenigstens ein Additiv auf Basis von Molekülen mit 2 oder mehr Epoxid-Gruppen pro Molekül, wobei es sich um wenigstens ein epoxidiertes natürliches Öl handelt.

Überraschenderweise führt die Kombination der Komponenten b) und c) zu erfindungsgemäßen, Polyalkylenterephthalat basierten Zusammensetzungen und daraus herzustellenden Formmassen, die eine hohe Schmelzstabilität unter Verarbeitungsbedingungen, d. h. keinen Aufbau der Schmelzviskosität zeigen, wobei sich aus den Formmassen zu fertigende Erzeugnisse durch gute Oberflächen und gute mechanische Eigenschaften auszeichnen und eine hohe Hydrolysebeständigkeit zeigen, die durch Zugabe eines Fließmittels nicht abnimmt, wie im Beispielteil dargestellt wird.

### Definitionen

In einer Ausführungsform betrifft die vorliegende Erfindung verstärkte Zusammensetzungen, Formmassen oder Erzeugnisse, die sich durch die Anwesenheit wenigstens eines Füll- oder Verstärkungsstoffes auszeichnen.

Als schmelzestabile Formmassen werden solche bezeichnet, die auch nach Verweilzeiten >5 min, deutlich oberhalb des Schmelzpunktes, vorzugsweise oberhalb von 260°C jedoch unterhalb der Zersetzungstemperatur, keinen Aufbau der Schmelzviskosität zeigen. Eine leichte Verringerung der Schmelzviskosität, wie sie dem Fachmann bekannt und für Polyalkylenterephthalate unter solchen Bedingungen immer zu beobachten ist, ist erfindungsgemäß der gewünschte Zustand.

Die Schmelzestabilität wird dabei durch zeitaufgelöste MVR-Messungen nach ISO 1133 bei 260°C und einem Prüfgewicht von 2.16 kg bestimmt. Der MVR-Wert wird nach 5 und 20 Minuten Verweilzeit bei 260°C bestimmt. Eine Erniedrigung des MVR-Wertes zeigt dabei eine Erhöhung der Schmelzviskosität an. Folglich kann eine Formmasse bei der sich der MVR-Wert durch längeres Verweilen bei 260°C leicht erhöht, als schmelzestabil angesehen werden.

Die Schmelzviskosität wurde im Rahmen der vorliegenden Anmeldung nach ISO 11443 in Abhängigkeit von der Scherviskosität bestimmt (Maßeinheit Pa•s). Ein gutes Fließverhalten ist dabei durch eine geringe Schmelzviskosität bei typischen, der Verarbeitung entsprechenden Scherraten (z. B. Eta = 1500 s⁻¹), gekennzeichnet.

Gute mechanische Eigenschaften im Sinne der vorliegenden Erfindung zeichnen sich im Falle erfindungsgemäßer Erzeugnisse durch hohe Werte bei der Izod Schlagzähigkeit aus. Die Schlagzähigkeit beschreibt die Fähigkeit eines Werkstoffes, Stoßenergie und Schlagenergie zu absorbieren, ohne zu brechen. Die Prüfung der Izod Schlagzähigkeit nach ISO 180 ist eine Standard-Methode zur Bestimmung der Schlagzähigkeit von Materialien. Hierbei wird ein Arm eines Pendelschlagwerks zunächst in einer bestimmten Höhe gehalten (= konstante potentielle Energie) und schließlich freigegeben. Der Arm trifft auf die Probe wobei diese bricht. Von der Energie, die durch die Probe absorbiert wird, wird die Aufprallenergie bestimmt. Die Schlagzähigkeit wird berechnet als das Verhältnis aus Schlagarbeit und Probekörperquerschnitt (Maßeinheit kJ/m²). Die Schlagzähigkeit wurde im Rahmen der vorliegenden Erfindung gemäß ISO 180-1U bei 23°C bestimmt.

Die Oberflächengüte von Erzeugnissen auf Basis erfindungsgemäßer Zusammensetzungen wurde im Rahmen der vorliegenden Erfindung an Prüfkörpern der Dimension 60 mm x 60 mm x 2 mm begutachtet und visuell eingeschätzt. Entscheidend für die Beurteilung waren die Kriterien Glanz, Glätte, Farbe und einheitliche Struktur der Oberfläche.

### Bevorzugte Ausführungsformen der Erfindung

Die Zusammensetzungen, Formmassen oder Erzeugnisse enthalten
a) wenigstens ein Polyalkylenterephthalat,
b) wenigstens ein Copolymerisat aus einem Olefin und aus einem Acrylsäureester eines aliphatischen Alkohols, wobei der nach ISO 1133 zu bestimmende Melt-Flow-Index (MFI) des Copolymerisats 50 g /10 min, bevorzugt 150 g / 10 min nicht unterschreitet und dieser bei 190°C und einem Prüfgewicht von 2.16 kg gemessen bzw. bestimmt wird, und
c) wenigstens ein Additiv auf Basis epoxidierter natürlicher Öle mit 2 oder mehr Epoxid-Gruppen pro Molekül.

Vorzugsweise betrifft die vorliegende Erfindung Zusammensetzungen, Formmassen oder Erzeugnisse enthaltend
a) Polybutylenterephthalat,
b) wenigstens ein Copolymerisat aus einem Olefin und aus einem Acrylsäureester eines aliphatischen Alkohols, wobei der nach ISO 1133 zu bestimmende Melt-Flow-Index (MFI) des Copolymerisats 50 g /10 min, bevorzugt 150 g / 10 min nicht unterschreitet und dieser bei 190°C und einem Prüfgewicht von 2.16 kg gemessen bzw. bestimmt wird, und
c) wenigstens ein Additiv auf Basis epoxidierter natürlicher Öle mit 2 oder mehr Epoxid-Gruppen pro Molekül.

Vorzugsweise betrifft die vorliegende Erfindung Zusammensetzungen, Formmassen oder Erzeugnisse enthaltend zusätzlich zu den Komponenten a), b) und c) noch Komponente d) wenigstens einen Füll- und/oder Verstärkungsstoff.

Vorzugsweise betrifft die vorliegende Erfindung Zusammensetzungen, Formmassen oder Erzeugnisse enthaltend zusätzlich zu den Komponenten a), b), c) und d), oder anstelle von d) noch wenigstens einen Schlagzähmodifikator.

Vorzugsweise betrifft die vorliegende Erfindung Zusammensetzungen, Formmassen oder Erzeugnisse enthaltend zusätzlich zu den Komponenten a), b), c), d) und e), oder anstelle von d) und/oder e) noch f) wenigstens ein weiteres, von den Komponenten b) bis e) verschiedenes Additiv.

Vorzugsweise betrifft die vorliegende Erfindung Zusammensetzungen, Formmassen oder Erzeugnisse enthaltend auf 100 Massenanteile der Komponente a) die Komponente b) in Mengen im Bereich von 0,1 bis 35 Massenanteilen und die Komponente c) in Mengen im Bereich von 0,1 bis 25 Massenanteilen.

Vorzugsweise betrifft die vorliegende Erfindung Zusammensetzungen, Formmassen oder Erzeugnisse enthaltend auf 100 Massenanteile der Komponente a) die Komponente d) in Mengen im Bereich von 5 bis 150 Massenanteilen.

Vorzugsweise betrifft die vorliegende Erfindung Zusammensetzungen, Formmassen oder Erzeugnisse enthaltend auf 100 Massenanteile der Komponente a) die Komponente e) in Mengen im Bereich von 5 bis 50 Massenanteilen.

Vorzugsweise betrifft die vorliegende Erfindung Zusammensetzungen, Formmassen oder Erzeugnisse enthaltend auf 100 Massenanteile der Komponente a) die Komponente f) in Mengen im Bereich von 0 bis 100 Massenanteilen.

Die Erfindung betrifft zudem die Verwendung von Zusammensetzungen enthaltend die Komponenten a), b) und c) sowie gegebenenfalls d) und/oder e) und/oder f) zur Herstellung von Formmassen bzw. Erzeugnissen.

Ferner betrifft die Erfindung ein Verfahren zur Steigerung der Schmelzestabilität Polyalkylenterephthalat basierter Formmassen bzw. daraus herzustellender Erzeugnisse, vorzugsweise PBT basierter Erzeugnisse, durch Zusatz von wenigstens einem Copolymerisat aus mindestens einem Olefin und mindestens aus einem Methacrylsäureester oder Acrylsäureester eines aliphatischen Alkohols, wobei der nach ISO 1133 zu bestimmende Melt-Flow-Index (MFI) des Copolymerisats 50 g /10 min, bevorzugt 150 g / 10 min, nicht unterschreitet und dieser bei 190°C und einem Prüfgewicht von 2.16 kg gemessen bzw. bestimmt wird, und wenigstens einem Additiv auf Basis von Molekülen mit 2 oder mehr Epoxid-Gruppen pro Molekül, wobei es sich um wenigstens ein epoxidiertes natürliches Öl handelt.

In einer Ausführungsform betrifft die Erfindung ein Verfahren zur Steigerung der Hydrolysestabilität Polyalkylenterephthalat basierter Erzeugnisse, vorzugsweise PBT basierter Erzeugnisse, durch Zusatz von wenigstens einem Copolymerisat aus mindestens einem Olefin und mindestens aus einem Methacrylsäureester oder Acrylsäureester eines aliphatischen Alkohols, wobei der nach ISO 1133 zu bestimmende Melt-Flow-Index (MFI) des Copolymerisats 50 g /10 min, bevorzugt 150 g / 10 min, nicht unterschreitet und dieser bei 190°C und einem Prüfgewicht von 2.16 kg gemessen bzw. bestimmt wird, und wenigstens einem Additiv auf Basis von Molekülen mit 2 oder mehr Epoxid-, Anhydrid- oder Carbodiimid-Gruppen pro Molekül.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Die vorliegende Erfindung betrifft die erfindungsgemäßen Zusammensetzungen, daraus herzustellende Formmassen, sowie wiederum aus den Formmassen herzustellende Erzeugnisse enthaltend wenigstens eine erfindungsgemäße Zusammensetzung. Zitierte Normen gelten in der zum Anmeldetag gültigen Fassung, sofern nicht anders angegeben. Wenngleich DIN EN ISO 10927 ein allgemeines Verfahren zum Bestimmen der mittleren Molmasse und der Molmassenverteilung von Polymeren in einem Molmassenbereich von 2000 g/mol bis 20000 g/mol durch die matrixunterstützte Laser-Desorptions/lonisations-Flugzeit-Massenspektrometrie festlegt, so liefert sie im Rahmen der vorliegenden Erfindung auch zuverlässige Werte zur Komponente c) im Molmassenbereich von 500 g/mol bis 1000 g/mol und wird bzw. wurde deshalb entsprechend angewandt. (Meth)acrylsäureester im Sinne der vorliegenden Erfindung bedeutet Methacrylsäureester und / oder Acrylsäureester.

Die Zubereitung erfindungsgemäßer Zusammensetzungen für die Herstellung schmelzestabiler Formmassen für den weiteren Einsatz zur Herstellung von Erzeugnissen, vorzugsweise durch Spritzguss, in der Extrusion oder zum Blasformen, erfolgt durch Mischen der einzelnen Komponenten in wenigstens einem Mischaggregat, vorzugsweise einem Compounder, besonders bevorzugt einem gleichsinnig drehenden Zweiwellenextruder. Hierdurch werden als Zwischenprodukte erfindungsgemäße, schmelzestabile Formmassen erhalten. Diese Formmassen - auch als thermoplastische Formmassen bezeichnet - können entweder ausschließlich aus den Komponenten a), b) und c) bestehen, oder aber zusätzlich wenigstens eine der Komponenten d), e) oder f) enthalten. Die erfindungsgemäßen Zusammensetzungen, Formmassen oder Erzeugnisse können die Komponenten d), e) und f) enthalten, sie können sie aber auch nicht enthalten. Erfindungsgemäß ergeben sich für die Zusammensetzungen, Formmassen oder Erzeugnisse folgende Kombinationen:
a), b), c)
a), b), c), d)
a), b), c), e)
a), b), c), f)
a). b), c) d), e)
a), b), c), d), f)
a), b), c), d), e), f)

### Komponente a)

Polyalkylenterephthalate im Sinne der Erfindung sind Reaktionsprodukte aus aromatischen Dicarbonsäuren oder ihren reaktionsfähigen Derivaten, vorzugsweise Dimethylestern oder Anhydriden, und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen **(**Kunststoff-Handbuch, Bd. VIII, S. 695 FF, Karl-Hanser-Verlag, München 1973**).**

Bevorzugte Polyalkylenterephthalate enthalten mindestens 80 Mol-%, vorzugsweise 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3-bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, insbesondere Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674**,** DE-A 24 07 776**,** DE-A 27 15 932**).**

Die Polyalkylenterephthalate können durch Einbau relativ kleiner Mengen 3- oder 4-wertiger Alkohole oder 3- oder 4-basischer Carbonsäure, wie sie z. B. in der DE-A 19 00 270 beschrieben sind, verzweigt werden. Bevorzugte Verzweigungsmittel sind Trimesinsäure, Trimellitsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten vorzugsweise deren Dialkylestern, und Ethylenglykol und/oder Propandiol-1,3 und/oder Butandiol-1,4 und/oder Cyclohexan-dimethanol-1,4 hergestellt werden, insbesondere Polyethylen- und Polybutylenterephthalat, und Mischungen dieser Polyalkylenterephthalate.

Bevorzugte Polyalkylenterephthalate sind auch CoPolyalkylenterephthalate, die aus mindestens zwei der obengenannten Säurekomponenten und/oder aus mindestens zwei der obengenannten Alkoholkomponenten hergestellt werden, besonders bevorzugte CoPolyalkylenterephthalate sind Poly-(ethylenglykol/butandiol-1,4)-terephthalate.

Die erfindungsgemäß einzusetzenden thermoplastischen Polyalkylenterephthalate können auch im Gemisch mit anderen Polyalkylenterephthalaten und/oder weiteren Polymeren eingesetzt werden.

Das erfindungsgemäß als Komponente a) bevorzugt einzusetzende Polybutylenterephthalat (PBT) [CAS Nr. 24968-12-5] wird aus Terephthalsäure oder ihren reaktionsfähigen Derivaten und Butandiol nach bekannten Methoden hergestellt (Kunststoff-Handbuch, Bd. VIII, S. 695 ff, Karl Hanser Verlag, München 1973).

Bevorzugt enthält das als Komponente a) einzusetzende PBT mindestens 80 Mol-%, vorzugsweise mindestens 90 Mol-%, bezogen auf die Dicarbonsäure, Terephthalsäurereste.

Das erfindungsgemäß bevorzugt als Komponente a) einzusetzende PBT kann in einer Ausführungsform neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure, 2,5-Furandicarbonsäure.

Das erfindungsgemäß als Komponente a) bevorzugt einzusetzende PBT kann in einer Ausführungsform neben Butandiol bis zu 20 Mol-% andere aliphatische Diole mit 3 bis 12 C-Atomen oder bis zu 20 Mol -% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 1,4-Cyclohexandimethanol, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan,2,2-bis-(3-β-hydroxyethoxyphenyl)-propan und 2,2-bis-(4- hydroxypropoxy-phenyl)-propan.

Als Komponente a) bevorzugt einzusetzendes PBT hat vorzugsweise eine intrinsische Viskosität nach EN-ISO 1628/5 im Bereich von 40 bis 170cm³/g, besonders bevorzugt im Bereich von 50 bis 150cm³/g, ganz besonders bevorzugt im Bereich von 65 bis 135cm³/g, jeweils gemessen im Ubbelohde Viskosimeter in Phenol/o-Dichlorbenzol (1:1 Gew.-Teile) bei 25°C. Die intrinsische Viskosität *iV,* auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z. B. Billmeyer) abgeschätzt werden. Die VN [ml/g] erhält man aus der Messung der Lösungsviskosität im Kapillar-Viskosimeter, beispielsweise Ubbelohde-Viskosimeter. Die Lösungsviskosität ist ein Maß für das mittlere Molekulargewicht eines Kunststoffs. Die Bestimmung erfolgt am gelösten Polymer, wobei unterschiedliche Lösungsmittel, vorzugsweise m-Kresol, Tetrachlorethan, Phenol, 1,2-Dichlorbenzol, und Konzentrationen zum Einsatz kommen. Durch die Viskositätszahl VN ist eine Kontrolle der Verarbeitungs- und Gebrauchseigenschaften von Kunststoffen möglich. Siehe hierzu auch: http://de.wikipedia.org/wiki/Viskosimetrie und "http://de.wikipedia.org/wiki/Mark-Houwink-Gleichung".

Das erfindungsgemäß bevorzugt als Komponente a) einzusetzende PBT kann auch im Gemisch mit anderen Polymeren, vorzugsweise mit Polyethylenterephthalat und/oder Polycyclohexylendimethylenterephthalat, eingesetzt werden. Die Herstellung solcher erfindungsgemäß einzusetzender PBT Blends erfolgt durch Compoundieren. Während einer solchen Compoundierung können zudem übliche Additive, insbesondere Entformungsmittel oder Elastomere in der Schmelze zugemischt werden, wodurch die Eigenschaften der Blends verbessert werden.

Erfindungsgemäß einzusetzendes PBT kann als Pocan^{®} B 1300 von der Lanxess Deutschland GmbH, Köln, bezogen werden.

### Komponente b)

Als Komponente b) enthalten die erfindungsgemäßen Zusammensetzungen wenigstens ein Copolymerisat aus mindestens einem Olefin, bevorzugt α-Olefin, und mindestens einem Methacrylsäureester oder einem Acrylsäureester eines aliphatischen Alkohols, wobei der MFI des Copolymerisats b) 50 g / 10 min, bevorzugt 150 g / 10 min nicht unterschreitet. Vorzugsweise enthält das als Komponente b) einzusetzende Coplymerisat keine weiteren Bestandteile, also nur die zwei Komponenten Olefin und (Meth)acrylsäureester.

In einer bevorzugten Ausführungsform ist Komponente b) ein Copolymerisat aus einem Olefin, bevorzugt α-Olefin, und aus einem Acrylsäureester eines aliphatischen Alkohols, wobei der MFI des Copolymerisats b) 50 g / 10 min, bevorzugt 150 g / 10 min nicht unterschreitet.

Vorzugsweise enthält Komponente b) weniger als 4 Gew.-% bezogen auf 100 Gew.-% der Komponente b), besonders bevorzugt weniger als 1,5 Gew.-% und ganz besonders bevorzugt 0 Gew.-% Monomerbausteine, die weitere reaktive funktionelle Gruppen, vorzugsweise ausgewählt aus der Gruppe umfassend Oxetane, Imide, Aziridine, Furane, Säuren, Amine, Oxazoline, enthalten.

Bevorzugte Olefine, insbesondere α-Olefine, als Bestandteil der Komponente b) weisen Kohlenstoffatome in einer Anzahl im Bereich von 2 bis 10 auf. Bevorzugte Olefine können unsubstituiert oder mit einer oder mehreren aliphatischen, cycloaliphatischen oder aromatischen Gruppen substituiert sein.

Bevorzugte Olefine sind ausgewählt aus der Gruppe umfassend Ethen, Propen, 1-Buten, 1-Penten, 1-Hexen, 1-Octen, 3-Methyl-1-penten. Besonders bevorzugte Olefine sind Ethen und Propen, ganz besonders bevorzugt ist Ethen.

Ebenfalls geeignet sind Mischungen der beschriebenen Olefine.

In einer weiter bevorzugten Ausführungsform werden die weiteren reaktiven funktionellen Gruppen, ausgewählt aus der Gruppe umfassend Oxetane, Imide, Aziridine, Furane, Säuren, Amine, Oxazoline, der Komponente b) ausschließlich über das Olefin in das Copolymerisat eingebracht.

Der Gehalt des Olefins am Copolymerisat liegt vorzugsweise im Bereich von 50 bis 90 Gew.-%, besonders bevorzugt im Bereich von 55 bis 75 Gew.-%, bezogen auf 100 Gew.-% der Komponente b).

Das Copolymerisat wird weiterhin definiert durch den zweiten Bestandteil neben dem Olefin. Als zweiter Bestandteil sind Alkyl- oder Arylalkylester der Methacrylsäure oder der Acrylsäure geeignet, deren Alkyl- oder Arylalkylgruppe aus 1 bis 30 Kohlenstoffatomen, vorzugsweise 3 bis 20 Kohlenstoffatomen, gebildet wird. Die Alkyl- oder Arylalkylgruppe kann dabei linear oder verzweigt sein sowie cycloaliphatische oder aromatische Gruppen enthalten, daneben auch durch eine oder mehrere Ether- oder Thioetherfunktionen substituiert sein.

Vorzugsweise wird die Alkyl- oder Arylalkylgruppe des Methacrylsäureesters oder des Acrylsäureesters ausgewählt aus der Gruppe umfassend 1-Proply, 1-Butyl, 1-Pentyl, 1-Hexyl, 2-Hexyl, 3-Hexyl, 1-Heptyl, 3-Heptyl, 1-Octyl, 1-(2-Ethyl)-hexyl, 1-Nonyl, 1-Decyl, 1-Dodecyl, 1-Lauryl oder 1-Octadecyl. Bevorzugt sind Alkyl- oder Arylalkylgruppen mit 3 bis 20 Kohlenstoffatomen.

Ebenfalls geeignet sind Mischungen der beschriebenen Acrylsäure- oder Methacrylsäurester.

Erfindungsgemäß besonders bevorzugt ist die Verwendung von mehr als 60 Massenanteilen, besonders bevorzugt mehr als Massenanteilen und ganz besonders bevorzugt die Verwendung von 100 Massenanteilen Acrylsäure-(2-ethyl)-hexylester bezogen auf die Gesamtmenge von 100 Massenanteilen Komponente b).

In einer weiteren bevorzugten Ausführungsform werden die weiteren reaktiven funktionellen Gruppen, ausgewählt aus der Gruppe umfassend Oxetane, Imide, Aziridine, Furane, Säuren, Amine, Oxazoline, des Copolymerisats b) ausschließlich über den Methacrylsäurester oder über den Acrylsäureester in das Copolymerisat b) eingebracht. Der Gehalt des Methacrylsäureesters oder des Acrylsäureesters am Copolymerisat b) liegt im Bereich von 10 bis 50 Massenanteilen, bevorzugt im Bereich von 25 bis 45 Massenanteilen, bezogen auf 100 Massenanteile der Komponente b).

Erfindungsgemäß einzusetzende Copolymerisate b) zeichnen sich neben der chemischen Zusammensetzung durch das niedrige Molekulargewicht aus. Dementsprechend sind für die erfindungsgemäßen Zusammensetzungen nur Copolymerisate b) geeignet, die einen MFI-Wert gemessen bei 190°C und einer Belastung von 2,16 kg von mindestens 50 g / 10min, bevorzugt von mindestens 150 g / 10 min, und besonders bevorzugt von 300g / 10min aufweisen. Erfindungsgemäß ganz besonders bevorzugt wird als Komponente b) das Copolymerisat aus Ethen und Acrylsäure-2-ethylhexylester [CAS Nr. 26984-27-0] eingesetzt, das unter der Marke Lotryl^{®} bei Arkema Group, Frankreich, zu beziehen ist.

Die als Komponente b) einzusetzenden Copolymerisate können in den erfindungsgemäßen Formmassen auch als Fließmittel wirken.

### Komponente c)

Als Komponente c) wird wenigstens ein Additiv auf Basis von Molekülen mit 2 oder mehr Epoxid-Gruppen Molekül eingesetzt, wobei es sich um ein epoxidiertes natürliches Öl handelt. Besonders bevorzugt haben Additive der Komponente c) wenigstens eine endständige Epoxid-Gruppe, aber insgesamt mindestens zwei Epoxid-Gruppen pro Molekül.

Bevorzugte **epoxidierte natürliche Öle** basieren auf wenigstens einem Öl aus der Gruppe Olivenöl, Leinöl, Erdnussöl, Palmöl, Sojabohnenöl und Lebertran. Besonders bevorzugt ist Leinöl oder Sojabohnenöl, ganz besonders bevorzugt Leinöl.

Das mittlere Molekulargewicht der als Komponente c) einzusetzenden epoxidierten natürlichen Öle liegt vorzugsweise im Bereich von 500 bis 1000g/mol und wird bestimmt durch matrixunterstützte Laser-Desorptions/lonisations-Flugzeit-Massenspektrometrie gemäß DIN EN ISO 10927. Erfindungsgemäß bevorzugt einzusetzende Lein- oder Sojabohnenöle sind Gemische von Trifettsäureglyzeriden, wobei der C₁₈-Carbonsäureanteil überwiegt.

Epoxidierte natürliche Öle werden im Allgemeinen nach den für einen Fachmann geläufigen Methoden hergestellt; siehe Angew. Chem. 2000, 112, 2292 - 2310**.**

Bevorzugte **epoxidierte Fettsäureester** erhält man aus gesättigten oder ungesättigten aliphatischen Carbonsäuren mit 10 bis 40 C-Atomen, bevorzugt mit 16 bis 22 C-Atomen, durch Umsetzung mit aliphatischen gesättigten Alkoholen mit 2 bis 40 C-Atomen, vorzugsweise 2 bis 6 C-Atomen.

Vorzugsweise handelt es sich um 1- oder 2-wertige Carbonsäuren. Besonders bevorzugt wird wenigstens eine Carbonsäure aus der Gruppe Pelargonsäure, Palmitinsäure, Laurinsäure, Margarinsäure, Dodecandisäure, Behensäure, Stearinsäure, Caprinsäure, Montansäure, Linolsäure, Linolensäure und Ölsäure ausgesucht.

Vorzugsweise einzusetzende aliphatische gesättigte Alkohole sind 1- bis 4-wertig. Besonders bevorzugt wird wenigstens ein Alkohol ausgewählt aus der Gruppe n-Butanol, n-Octanol, Stearylalkohol, Ethylenglykol, Propylenglykol, Neopentylglycol, Pentaerythrit und Glycerin. Insbesondere bevorzugt ist Glycerin.

Es können auch Mischungen verschiedener Ester und / oder Öle eingesetzt werden.

Die Einführung der Epoxid-Funktion in die vorstehend genannten Ester und / oder Öle erfolgt über Reaktion dieser mit epoxidierenden Agentien, vorzugsweise mit Persäuren, insbesondere mit Peressigsäure. Derartige Umsetzungen sind dem Fachmann hinreichend bekannt.

Die Herstellung **synthetischer epoxidierter Verbindungen** ist dem Fachmann ebenfalls bekannt. Bevorzugte synthetische epoxidierte Verbindungen sind Polyglycidyl- oder Poly-(beta-methylglycidyl)-ether erhältlich durch Umsetzung einer Verbindung mit mindestens zwei freien alkoholischen oder phenolischen Hydroxygruppen und / oder durch Umsetzung von phenolischen Hydroxygruppen mit einem substituierten Epichlorhydrin, bevorzugt unter alkalischen Bedingungen oder in Anwesenheit eines sauren Katalysators und anschließender Alkalibehandlung.

Bevorzugte Polyglycidyl- oder Poly-(beta-methylglycidyl)-ether leiten sich ab von acyclischen Alkoholen, insbesondere Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimetylpropan, Bistrimethylolpropan, Pentaerythrit, Sorbit sowie von Polyepichlorhydrinen.

Alternativ bevorzugte Polyglycidyl- oder Poly-(beta-methylglycidyl)-ether leiten sich ab von cycloaliphatischen Alkoholen, insbesondere 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en, oder sie besitzen aromatische Kerne basierend auf N,N-Bis-8,2-hydroxyethyl)-anilin oder p,p'-Bis-(2-hydroxyethyl-amino)-diphenylmethan.

Bevorzugte synthetische epoxidierte Verbindungen basieren zudem auf einkernigen Phenolen, auf mehrkernigen Phenolen, oder auf unter sauren Bedingungen erhaltenen Kondensationsprodukten von Phenolen mit Formaldehyd.

Bevorzugte einkernige Phenole sind Resorcin oder Hydrochinon.

Bevorzugte mehrkernige Phenole sind Bis-(4hydroxyphenyl)-methan, 2,2-Bis-(4-hydroxyphenyl)-propan, 2,2-Bis-(3,5-dibrom-4-hydroxyphenyl)-propan oder 4,4'-Dihydroxydiphenylsulfon.

Bevorzugte Kondensationsprodukte von Phenolen mit Formaldehyd sind Phenol-Novolake.

Bevorzugte aromatische Epoxid-Verbindungen weisen 2 endständige Epoxid-Funktionen auf.

Bevorzugte aromatische Epoxid-Verbindung mit 2 endständigen Epoxid-Funktionen ist ein oligomeres Reaktionsprodukt aus Bisphenol A mit Epichlorhydrin der Formel (I), 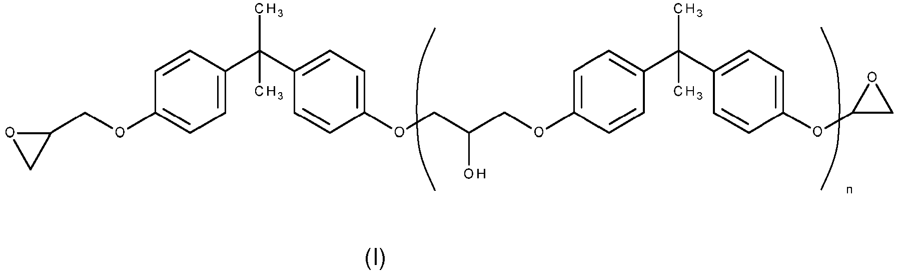 mit n im Bereich von 0 bis 10, vorzugsweise mit n im Bereich von 1 bis 8, besonders bevorzugt mit n im Bereich von 1 bis 6, wobei n der durchschnittlichen Anzahl an 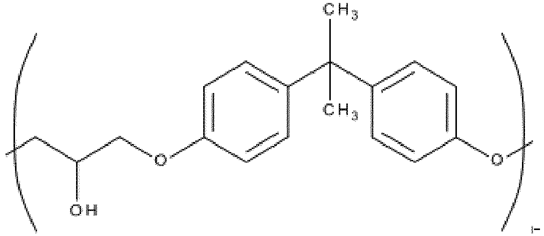 Einheiten in der Formel (I) entspricht.

Bevorzugt besitzt eine erfindungsgemäß einzusetzende synthetische Epoxid-Verbindung einen Erweichungspunkt nach Mettler gemäß DIN 51920 im Bereich von 0 bis 150°C, besonders bevorzugt 50°C bis 120°C, ganz besonders bevorzugt im Bereich von 60°C bis 110°C und insbesondere im Bereich von 75°C bis 95°C. Der Erweichungspunkt nach Mettler ist die Temperatur, bei der die Probe aus einem zylindrischen Nippel mit einer Ausflussöffnung von 6,35 mm Durchmesser ausfließt, wobei sie eine 19 mm tiefer liegende Lichtschranke unterbricht. Zu diesem Zweck wird die Probe an Luft unter konstanten Bedingungen aufgeheizt

Vorzugsweise einzusetzende synthetische Epoxid-Verbindungen weisen ein mittleres Epoxidäquivalent-Gewicht (EEW, Gramm Harz die ein Mol epoxidisch gebundenen Sauerstoff enthalten) via Titration gemäß DIN16945 im Bereich von 160 bis 2000 g/eq auf, bevorzugt im Bereich von 250 bis 1200 g/eq, besonders bevorzugt im Bereich von 350 bis 1000 g/eq und insbesondere bevorzugt im Bereich von 450 bis 800 g/eq.

Insbesondere bevorzugt wird als Komponente c) ein Poly(Bisphenol A-co-Epichlorhydrin) [CAS Nr. 25068-38-6] eingesetzt, vorzugsweise mit einem durch MALDI-TOF-Massenspektrometrie durch matrixunterstützte Laser- Desorptions/lonisations-Flugzeit-Massenspektrometrie gemäß EN ISO 10927 zu bestimmenden zahlenmittleren Molekulargewicht (Mₙ) im Bereich von 600 bis 1800 g/mol, zu beziehen als Epilox^{®} von Leuna Harze GmbH, Leuna.

In einer bevorzugten Ausführungsform der vorliegenden Erfindung sind in den Zusammensetzungen, Formmassen und Erzeugnissen neben den Komponenten a), b) und c) keine weiteren Komponenten enthalten.

### Komponente d)

Vorzugsweise wird als Komponente d) wenigstens ein Füll- oder Verstärkungsstoff eingesetzt. Bevorzugt werden als Komponente d) wenigstens ein Füll- oder Verstärkungsstoff aus der Gruppe Kohlenstofffasern, Glaskugeln, gemahlenes Glas, amorphe Kieselsäure, Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0], Montmorillonit [CAS Nr. 67479-91-8] und Glasfasern [CAS Nr. 65997-17-3] eingesetzt. Besonders bevorzugt werden Glasfasern eingesetzt, insbesondere bevorzugt Glasfasern aus E-Glas.

Die erfindungsgemäß besonders bevorzugten **Glasfasern** haben vorzugsweise einen Faserdurchmesser im Bereich von 7 bis 18 µm, besonders bevorzugt im Bereich von 9 bis 15 µm, und werden als Endlosfasern oder als geschnittene oder gemahlene Glasfasern zugesetzt.

Gemäß "http://de.wikipedia.org/wiki/Faser-Kunststoff-Verbund" unterscheidet man a) geschnittene Fasern, auch als Kurzfasern bezeichnet, mit einer Länge im Bereich von 0,1 bis 1 mm, b) Langfasern mit einer Länge im Bereich von 1 bis 50 mm und c) Endlosfasern mit einer Länge L > 50 mm. Faserlängen können beispielsweise durch Microfokus-Röntgen-Computertomographie (µ-CT) bestimmt werden; DGZfP-Jahrestagung 2007 - Vortrag 47.

Die Fasern werden bevorzugt mit einem Schlichtesystem oder einem Haftvermittler bzw. Haftvermittlersystem, besonders bevorzugt auf Silanbasis, ausgerüstet.

Ganz besonders bevorzugte Haftvermittler auf Silanbasis für die Vorbehandlung sind Silanverbindungen der allgemeinen Formel (II)

(X-(CH₂)_{q})ₖ-Si-(O-CᵣH₂ᵣ₊₁)₄₋ₖ (II)

in der die Substituenten folgende Bedeutung haben:
X: NH₂-, HO-, 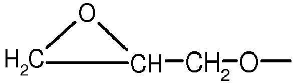
q: eine ganze Zahl von 2 bis 10, bevorzugt 3 bis 4,
r: eine ganze Zahl von 1 bis 5, bevorzugt 1 bis 2,
k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen bevorzugt in Mengen im Bereich von 0,05 bis 2 Massenanteile, besonders bevorzugt im Bereich von 0,25 bis 1,5 Massenanteile und insbesondere im Bereich von 0,5 bis 1 Massenanteile bezogen auf 100 Massenanteil Glasfasern zur Oberflächenbeschichtung eingesetzt.

Die Glasfasern können bedingt durch die Verarbeitung zur Formmasse (Compoundierung) bzw. dem daraus herzustellenden Erzeugnis in der Formmasse bzw. im Erzeugnis einen kleineren d97- bzw. d50-Wert aufweisen, als die ursprünglich eingesetzten Glasfasern. Die Glasfasern können bedingt durch die Verarbeitung zur Formmasse bzw. zum Enderzeugnis in der Formmasse bzw. im Enderzeugnis kürzere Längenverteilungen als ursprünglich eingesetzt aufweisen.

In einer bevorzugten Ausführungsform der vorliegenden Erfindung sind in den Zusammensetzungen, Formmassen und Erzeugnissen neben den Komponenten a), b), c) und d) keine weiteren Komponenten enthalten.

### Komponente e)

Erfindungsgemäß bevorzugt einzusetzende Schlagzähmodifizierer umfassen u.a. ein oder mehrere Pfropfpolymerisate von
E.1 5 bis 95 Massenanteile, vorzugsweise 30 bis 90 Massenanteile,, wenigstens eines Vinylmonomeren auf
E.2 95 bis 5 Massenanteile, vorzugsweise 70 bis 10 Massenanteile, einer oder mehrerer Pfropfgrundlagen mit Glasübergangstemperaturen < 10°C, vorzugsweise < 0°C, besonders bevorzugt <-20°C, jeweils bezogen auf 100 Massenanteile der Komponente e).

Die Pfropfgrundlage E.2 hat im allgemeinen eine mittlere Teilchengröße (d50-Wert) im Bereich von 0,05 bis 10 µm, vorzugsweise im Bereich von 0,1 bis 5 µm, besonders bevorzugt im Bereich von 0,15 bis 1 µm.

Monomere E.1 sind vorzugsweise (Meth)Acrylsäure-(C₁-C₈)-alkylester, insbesondere Methacrylsäure-(C₁-C₈)-Alkylester, insbesondere Methylmethacrylat, Ethylmethacrylat und/oder Glycidylmethacrylat, n-Butylacrylat, t-Butylacrylat, und/oder Derivate, insbesondere Anhydride und Imide ungesättigter Carbonsäuren, insbesondere Maleinsäureanhydrid oder N-Phenyl-Maleinimid.

### Bevorzugtes Monomere E.1 ist Methylmethacrylat.

### Ebenfalls geeignete Monomere E.1 sind Gemische aus

E.1.1 50 bis 99 Massenanteile Vinylaromaten und/oder kernsubstituierten Vinylaromaten, insbesondere Styrol, α-Methylstyrol, p-Methylstyrol, p-Chlorstyrol, und/oder Methacrylsäure-(C₁-C₈)-Alkylester, insbesondere Methylmethacrylat, Ethylmethacrylat und

E.1.2 1 bis 50 Massenanteile Vinylcyanide, insbesondere ungesättigte Nitrile wie Acrylnitril und Methacrylnitril, und/oder (Meth)Acrylsäure-(C₁-C₈)-alkylester, insbesondere Methylmethacrylat, Glycidylmethacrylat, n-Butylacrylat, t-Butylacrylat, und/oder Derivate, insbesondere Anhydride und Imide ungesättigter Carbonsäuren, insbesondere Maleinsäureanhydrid oder N-Phenyl-Maleinimid.

Bevorzugte Monomere E.1.1 sind ausgewählt aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat.

Für die in den Elastomermodifikatoren einzusetzenden Pfropfpolymerisate geeignete Pfropfgrundlagen E.2 sind beispielsweise Acrylatkautschuke, Dienkautschuke, EPDM-Kautschuke, also solche auf Basis Ethylen/Propylen und gegebenenfalls Dien, ferner Polyurethan-, Silikon-, Chloropren und Ethylen/Vinylacetat-Kautschuke. EPDM steht für Ethylen-Propylen-Dien-Kautschuk.

Bevorzugte Pfropfgrundlagen E.2 sind Acrylatkautschuke basieren auf Pfropfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören C₁-C₈-Alkylester, vorzugsweise Methyl-, Ethyl-, Butyl-, n-Octyl- und 2-Ethylhexylester; Halogenalkylester, vorzugsweise Halogen-C₁-C₈-alkyl-ester, vorzugsweise Chlorethylacrylat, Glycidylester sowie Mischungen dieser Monomeren. Dabei sind Propfpolymerisate mit Butylacrylat als Kern und Methylmethacrylaten als Schale, besonders bevorzugt.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Massenanteile, insbesondere 0,05 bis 2 Massenanteile, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Massenanteil der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, α-Methylstyrol, Acrylamide, Vinyl-C₁-C₈-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Massenanteile aufweisen.

Ebenfalls geeignete Pfropfgrundlagen E.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Hierbei geeignete Propfgrundlagen E.2 sind bevorzugt ABS-Polymerisate (Emulsions-, Masse- und Suspensions-ABS) wobei ABS für Acrylnitril-Butadien-Styrol steht, wie sie z. B. in der DE-A 2 035 390 oder in der DE-A 2 248 242 bzw. in Ullmann, Enzyklopädie der Technischen Chemie, Bd. 19 (1980), S. 280 ff**.** beschrieben sind. Der Gelanteil der Pfropfgrundlage E.2 beträgt bevorzugt mindestens 30 Massenanteile, besonders bevorzugt mindestens 40 Massenanteile (in Toluol gemessen). Ganz besonders bevorzugt ist ein Kautschuk auf Basis eines Acrylnitril-Butadien-Styrol-Copolymerisats. Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Weitere bevorzugt geeignete Pfropfgrundlagen gemäß E.2 sind Silikonkautschuke mit pfropfaktiven Stellen, wie sie in DE-A 3 704 657 , DE-A 3 704 655 , DE-A 3 631 540 und DE-A 3 631 539 beschrieben werden.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

In einer bevorzugten Ausführungsform der vorliegenden Erfindung sind in den Zusammensetzungen, Formmassen und Erzeugnissen neben den Komponenten a), b), c), d) und e), oder in den Zusammensetzungen, Formmassen und Erzeugnissen neben den Komponenten a), b), c) und e) keine weiteren Komponenten enthalten.

### Komponente f)

In einer Ausführungsform enthalten die erfindungsgemäßen Zusammensetzungen zusätzlich zu den Komponenten a) bis c) oder zusätzlich zu den Komponenten a) bis d) noch wenigstens ein von den Komponenten b, c), d) und e) verschiedenes Additiv f) aus der Gruppe Phosphitstabilisatoren, Entformungsmittel, UV-Stabilisatoren, Thermostabilisatoren, Gammastrahlenstabilisatoren, Antistatika, Fließhilfsmittel, Flammschutzmittel, Brandschutzadditive, Emulgatoren, Nukleierungsmittel, Weichmacher, Gleitmittel, Farbstoffe und Pigmente.

Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001**.** Die als Komponente f) einzusetzenden Additive können individuell oder in Mischung bzw. in Form von Masterbatchen eingesetzt werden.

Vorzugsweise wird als Komponente f) wenigstens ein **Phosphitstabilisator** eingesetzt. Bevorzugt wird wenigstens ein Phosphitstabilisator der Reihe Tris(2,4-ditert-butylphenyl)phosphit (Irgafos^{®} 168, BASF SE, [CAS Nr. 31570-04-4]), Bis(2,4-di-tert-butylphenyl)pentaerythritol-diphosphit (Ultranox^{®} 626, Chemtura,[CAS Nr. 26741-53-7]), Bis(2,6-di-ter-butyl-4-methylphenyl)pentaerythritol-diphosphit (ADK Stab PEP-36, Adeka, [CAS Nr. 80693-00-1]), Bis(2,4-dicumylphenyl)pentaerythritol-diphosphit (Doverphos^{®} S-9228, Dover Chemical Corporation,[CAS Nr. 154862-43-8]), Tris(nonylphenyl)phosphit (Irgafos^{®} TNPP, BASF SE, [CAS Nr. 26523-78-4]), (2,4,6-tri-t-butylphenol)2-butyl-2-ethyl-1,3-propanediol-phosphit (Ultranox^{®} 641, Chemtura, [CAS Nr. 161717-32-4]) oder Hostanox^{®} P-EPQ eingesetzt.

Vorzugsweise wird als Komponente f) wenigstens ein **Entformungsmittel** eingesetzt. Als bevorzugte Entformungsmittel wird wenigstens eines ausgewählt aus der Reihe Esterwachs(e), Pentaeritrytoltetrastearat (PETS), langkettige Fettsäuren, Salz(e) der langkettigen Fettsäuren, Amidderivat(e) der langkettigen Fettsäuren, Montanwachse sowie niedermolekulare Polyethylen- bzw. Polypropylenwachs(e) oder Ethylen Homopolymer Wachs(e).

Bevorzugte langkettige Fettsäuren sind Stearinsäure oder Behensäure. Bevorzugte Salze langkettiger Fettsäuren sind Calciumstearat oder Zinkstearat. Bevorzugtes Amidderivat langkettiger Fettsäuren ist Ethylen-bis-stearylamid. Bevorzugte Montanwachse sind Mischungen aus geradkettigen, gesättigten Carbonsäuren mit Kettenlängen von 28 bis 32 C-Atomen.

Als **Thermo-** oder **UV-Stabilisatoren** werden bevorzugt sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt.

Als **Weichmacher** werden bevorzugt Phthalsäuredioctylester, Phthalsäuredibenzylester, Phthalsäurebutylbenzylester, Kohlenwasserstofföle oder N-(n-Butyl)benzolsulfonamid eingesetzt.

Erfindungsgemäß als Komponente f) einzusetzende Nukleierungsmittel sind vorzugsweise Natrium- oder Kalium-Salze des Acetats, Salicylats, Steareats, Saccharinats, sowie teilverseifte Montanwachse und Ionomeren, Natrium- oder Calciumphenylphosphinat, Aluminiumoxid, Siliziumdioxid oder Talkum. Besonders bevorzugt wird als Nukleierungsmittel Talkum [CAS Nr.14807-96-6] eingesetzt, insbesondere mikrokristallines Talkum. Talkum, auch als Talk bezeichnet, ist ein Schichtsilikat mit der chemischen Zusammensetzung Mg₃[Si₄O₁₀(OH)₂], das je nach Modifikation als Talk-1A im triklinen oder als Talk-2M im monoklinen Kristallsystem kristallisiert (http://de.wikipedia.org/wiki/Talkum). Erfindungsgemäß einzusetzendes Talkum kann beispielsweise als Mistron^{®} R10 von Imerys Talc Group, Toulouse, Frankreich (Rio Tinto Group) bezogen werden.

### Verwendung

Die vorliegende Erfindung betrifft zudem die Verwendung wenigstens eines Copolymerisats aus mindestens einem Olefin und mindestens einem Acrylsäureester oder Methacrylsäureester eines aliphatischen Alkohols, wobei der nach ISO 1133 zu bestimmende Melt-Flow-Index (MFI) des Copolymerisats 50 g/10min nicht unterschreitet und dieser bei 190°C und einem Prüfgewicht von 2.16 kg gemessen bzw. bestimmt wird, und wenigstens eines Additivs auf Basis von Molekülen mit 2 oder mehr Epoxid-Gruppen pro Molekül, wobei es sich um wenigstens ein epoxidiertes natürliches Öl handelt. in wenigstens einem Polyalkylenterephthalat zur Herstellung Polyalkylenterephthalat basierter Zusammensetzungen, Formmassen oder Erzeugnisse.

Vorzugsweise betrifft die Erfindung die Verwendung der Komponenten b) und c) zur Bereitstellung Polyalkylenterephthalat basierter Formmassen mit hoher Schmelzstabilität unter Verarbeitungsbedingungen, die keinen Aufbau der Schmelzviskosität im Rahmen der, oder infolge der Verarbeitung zeigen und die eine niedrige Schmelzviskosität sowie ein gutes Fließverhalten bei ihrer Verarbeitung aufweisen.

Besonders bevorzugt betrifft die Erfindung die Verwendung der Komponenten b) und c) zur Bereitstellung Polyalkylenterephthalat basierter Erzeugnisse mit hoher Hydrolysebeständigkeit, die vorzugsweise auch durch Zugabe eines Fließmittels nicht abnimmt.

### Verfahren

Die Zubereitung erfindungsgemäßer Zusammensetzungen für die Herstellung von Formmassen für den weiteren Einsatz im Spritzguss oder in der Extrusion erfolgt durch Mischen der einzelnen Komponenten in wenigstens einem Mischaggregat, vorzugsweise einem Compounder. Zur Herstellung eines Polyalkylenterephthalat basierten Erzeugnisses werden die Formmassen einer Weiterverarbeitung unterzogen, vorzugsweise einem Spritzgussverfahren oder einer Extrusion. Die Verfahren des Spritzgusses sowie der Extrusion thermoplastischer Formmassen sind dem Fachmann bekannt.

Die vorliegende Erfindung betrifft deshalb ein Verfahren zur Herstellung von Erzeugnissen, vorzugsweise hydrolysestabiler Erzeugnisse, besonders bevorzugt hydrolysestabiler Erzeugnisse ohne dass die Hydrolysestabilität durch Zugabe eines Fließmittels abnimmt, indem man Zusammensetzungen enthaltend die Komponenten a), b) und c) in wenigstens einem Mischaggregat, vorzugsweise einem Compounder, zu Formmassen verarbeitet und diese einer Weiterverarbeitung, vorzugsweise einem Spritzgussverfahren oder einer Extrusion unterzieht.

Erfindungsgemäße Verfahren zur Herstellung Polyalkylenterephthalat basierter Erzeugnisse durch Extrusion oder Spritzguss werden bei Schmelztemperaturen im Bereich von 230 bis 330°C, bevorzugt im Bereich von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar, durchgeführt.

Bei der Extrusion unterscheidet man vorzugsweise in Profilextrusion und sequentielle Coextrusion. Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen **(**Thielen, Hartwig, Gust, "Blasformen von Kunststoffhohlkörpern", Carl Hanser Verlag, München 2006, Seite 127-129**).**

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Als Rohstoff werden erfindungsgemäße Zusammensetzungen eingesetzt, die vorzugsweise durch Compoundieren bereits zu einer Formmasse und diese wiederum vorzugsweise zu einem Granulat verarbeitet wurde. Nach dem Abkühlen (Erstarren) der in den temperierten Hohlraum eingespritzten Formmasse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang, hier aus einer erfindungsgemäßen Formmasse, im Extruder eingesetzt, wobei der Extruder eine Maschine zur Herstellung thermoplastischer Formstücke/Erzeugnisse ist. Man unterscheidet

Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Erfindungsgemäß erhältliche Erzeugnisse sind vorzugsweise Materialien die wässrigen Medien, Luftfeuchtigkeit oder Spritzwasser ausgesetzt sind. Die Anforderungen der Automobilindustrie an die in Kraftfahrzeugen einzusetzenden Bauteile steigen kontinuierlich und schaffen so auch für die verwendeten Materialien immer wieder neue Herausforderungen. Stecker, Steckverbinder und Gehäuseteile, die im Auto unter der Motorhaube eingesetzt werden, müssen daher immer härtere Tests bestehen. Zyklustests im Temperaturbereich von -40 bis +150°C unter Feuchtebedingungen sind keine Seltenheit und erfordern Werkstoffe, die mit speziellen Hydrolysestabilisatoren ausgerüstet sind. Beispielsweise wird PBT durch eine Polykondensationsreaktion aus Terephthalsäure oder auch Dimethyltherephthalat und 1,4-Butandiol unter Abspaltung von Wasser hergestellt. Diese Polykondensation ist jedoch bei hohen Temperaturen und hoher relativer Luftfeuchtigkeit (RLF) durch Hydrolyse umkehrbar. Bei der Reaktion von PBT mit Wasser wird die Polymerkette gespalten, es entstehen Bruchstücke mit kleinerer Kettenlänge bis hin zu den Edukten Terephthalsäure und 1,4-Butandiol. Das bedeutet, dass die Veresterung rückgängig gemacht wird (Deesterifikation). Schon ein hydrolysierter Anteil von 0,01% kann die Viskosität und das Molekulargewicht deutlich abbauen. Im Vergleich zum thermooxidativen oder thermischen Abbau kann im Fall der Hydrolyse die Zerstörung eines Polymers durch katalytisch wirkende Additive um das Tausend- bzw. Zehntausendfache beschleunigt werden. Um die Hydrolyse aufzuhalten oder zumindest zu verlangsamen, lassen sich verschiedene Stabilisatoren zusetzen. Dabei können die gängigen Stabilisatoren einerseits das Wasser abfangen, andererseits aber auch bereits zerstörte Polymerketten wieder aufbauen. Die Hydrolyse erfindungsgemäßer Erzeugnisse auf Basis von Polyalkylenterephthalaten wird durch Zugabe der Komponenten b) und c) aufgehalten oder zumindest verlangsamt.

Derartig hydrolysestabilisierte Erzeugnisse finden sich insbesondere in Kraftfahrzeugen, in der Elektronik-, Telekommunikations-, Informationstechnologie, oder in der Computerindustrie, sowie im Haushalt, Sport, in der Medizin oder in der Unterhaltungsindustrie.

Erfindungsgemäß bevorzugt sind Zusammensetzungen und daraus herzustellende Formmassen und Erzeugnisse enthaltend a) PBT, b) Copolymerisat aus Ethen und Acrylsäure-2-ethylhexylester und c) epoxidiertes Leinsamenöl oder oligomeres 2,2-Bis(4-(2,3-epoxypropoxy)phenyl)propan oder ein Phenol-Epichlorhydrin-Reaktionsprodukt.

Erfindungsgemäß bevorzugt sind Zusammensetzungen und daraus herzustellende Formmassen und Erzeugnisse enthaltend a) PBT, b) Copolymerisat aus Ethen und Acrylsäure-2-ethylhexylester, c) epoxidiertes Leinsamenöl oder oligomeres 2,2-Bis(4-(2,3-epoxypropoxy)phenyl)propan oder ein Phenol-Epichlorhydrin-Reaktionsprodukt und d) Glasfasern.

Erfindungsgemäß bevorzugt sind Zusammensetzungen und daraus herzustellende Formmassen und Erzeugnisse enthaltend a) PBT, b) Copolymerisat aus Ethen und Acrylsäure-2-ethylhexylester, c) epoxidiertes Leinsamenöl oder oligomeres 2,2-Bis(4-(2,3-epoxypropoxy)phenyl)propan oder ein Phenol-Epichlorhydrin-Reaktionsprodukt, d) Glasfasern und e) Methylmethacrylat-Butylacrylat-Propfcopolymer.

Erfindungsgemäß bevorzugt sind Zusammensetzungen und daraus herzustellende Formmassen und Erzeugnisse enthaltend a) PBT, b) Copolymerisat aus Ethen und Acrylsäure-2-ethylhexylester, c) epoxidiertes Leinsamenöl oder oligomeres 2,2-Bis(4-(2,3-epoxypropoxy)phenyl)propan oder ein Phenol-Epichlorhydrin-Reaktionsprodukt, d) Glasfasern, e) Methylmethacrylat-Butylacrylat-Propfcopolymer und f) Talkum.

Erfindungsgemäß bevorzugt sind Zusammensetzungen und daraus herzustellende Formmassen und Erzeugnisse enthaltend a) PBT, b) Copolymerisat aus Ethen und Acrylsäure-2-ethylhexylester, c) epoxidiertes Leinsamenöl oder oligomeres 2,2-Bis(4-(2,3-epoxypropoxy)phenyl)propan oder ein Phenol-Epichlorhydrin-Reaktionsprodukt, d) Glasfasern, e) Methylmethacrylat-Butylacrylat-Propfcopolymer und f) Phosphitstabilisator.

Erfindungsgemäß bevorzugt sind Zusammensetzungen und daraus herzustellende Formmassen und Erzeugnisse enthaltend a) PBT, b) Copolymerisat aus Ethen und Acrylsäure-2-ethylhexylester, c) epoxidiertes Leinsamenöl oder oligomeres 2,2-Bis(4-(2,3-epoxypropoxy)phenyl)propan oder ein Phenol-Epichlorhydrin-Reaktionsprodukt, d) Glasfasern, e) Methylmethacrylat-Butylacrylat-Propfcopolymer und f) Talkum sowie Phosphitstabilisator.

Erfindungsgemäß bevorzugt sind Zusammensetzungen und daraus herzustellende Formmassen und Erzeugnisse enthaltend a) PBT, b) Copolymerisat aus Ethen und Acrylsäure-2-ethylhexylester, c) epoxidiertes Leinsamenöl oder oligomeres 2,2-Bis(4-(2,3-epoxypropoxy)phenyl)propan oder ein Phenol-Epichlorhydrin-Reaktionsprodukt, d) Glasfasern, e) Methylmethacrylat-Butylacrylat-Propfcopolymer und f) wenigstens einen Fettsäureester.

Erfindungsgemäß bevorzugt sind Zusammensetzungen und daraus herzustellende Formmassen und Erzeugnisse enthaltend a) PBT, b) Copolymerisat aus Ethen und Acrylsäure-2-ethylhexylester, c) epoxidiertes Leinsamenöl oder oligomeres 2,2-Bis(4-(2,3-epoxypropoxy)phenyl)propan oder ein Phenol-Epichlorhydrin-Reaktionsprodukt, d) Glasfasern, e) Methylmethacrylat-Butylacrylat-Propfcopolymer und f) Talkum sowie wenigstens einen Fettsäureester.

Erfindungsgemäß bevorzugt sind Zusammensetzungen und daraus herzustellende Formmassen und Erzeugnisse enthaltend a) PBT, b) Copolymerisat aus Ethen und Acrylsäure-2-ethylhexylester, c) epoxidiertes Leinsamenöl oder oligomeres 2,2-Bis(4-(2,3-epoxypropoxy)phenyl)propan oder ein Phenol-Epichlorhydrin-Reaktionsprodukt, d) Glasfasern, e) Methylmethacrylat-Butylacrylat-Propfcopolymer und f) Talkum, Phosphitstabilisator und wenigstens einen Fettsäureester.

### Beispiele

Zur Herstellung erfindungsgemäßer Erzeugnisse auf Basis erfindungsgemäßer Zusammensetzungen wurden die einzelnen Komponenten in einem Zweiwellenextruder (ZSK 32 Mega Compounder der Fa. Coperion Werner & Pfleiderer, Stuttgart, Deutschland) bei Temperaturen im Bereich von 260 bis 300°C in der Schmelze vermischt, als Strang ausgetragen, im Wasserbad bis zur Granulierfähigkeit abgekühlt und granuliert. Vor weiteren Schritten wurde das Granulat bei 120°C im Vakuumtrockenschrank für ca. 4h getrocknet.

Die Platten und Prüfkörper für die in den **Tabellen 1 bis 3** aufgeführten Untersuchungen wurden auf einer handelsüblichen Spritzgießmaschine des Typs Arburg 320-210-500 bei einer Massetemperatur im Bereich von 250 bis 270°C und einer Werkzeugtemperatur im Bereich von 75 bis 85°C verspritzt.
- Prüfstäbe 80x10x4 mm (gem. ISO 178)
- Farbmusterplättchen: 60x40x2 mm

Bis auf die Schmelzeviskositätsmessungen und die Messungen der Schmelzindices wurden alle in den Tabellen 1 bis 3 aufgeführten Untersuchungen an o. g. Prüfkörpern durchgeführt.

### Schlagzähigkeit

Die Schlagzähigkeit der aus den erfindungsgemäßen Zusammensetzungen hergestellten Erzeugnisse in Form von Probekörpern der Maße 80 × 100 × 4 mm³ wurden im Schlagversuch nach ISO 180-1U (IZOD) bei 23°C bestimmt (Einheit kJ/m²).

### Schmelzviskosität

Die Schmelzviskosität wurde im Rahmen der vorliegenden Erfindung nach ISO 11443 bei der angegebenen (scheinbaren) Scherrate und Temperatur mit dem Gerät Malvern RH7-900 (Zylinder-Durchmesser = 15mm; Kapillar-Durchmesser = 1 mm; Kapillar-Länge = 32 mm) nach Trocknung des Granulats bei 120°C für 4 Stunden im Vakuumtrockner bestimmt. Die Messung ergab jeweils die scheinbare Viskosität in Pa•s.

### Schmelzindex MVR (Schmelze-Volumenfließrate)

Als Maß für die Schmelzestabilität wurden MVR-Messungen nach ISO 1133 an einem Fließprüfgerät B4106.200 der Fa. Zwick/Roell nach 5 und 20 Minuten Verweilzeit durchgeführt. Das Messergebnis wird in cm³ pro 10 min angegeben.

Reaktive Polyestermischungen können durch Temperatureinwirkung mit der Zeit Kettenlänge und damit Viskosität aufbauen. Bei einem Standard Polyester führt Temperatureinwirkung dagegen zu einem leichten Kettenabbau.

Die Prüfung nach 5 minütiger Verweilzeit im Fließprüfgerät erlaubte eine vergleichende Beurteilung des Ketten - bzw. Viskositätsabbaus in der Schmelze während der vorausgegangenen Compoundierung im Zweiwellenextruder. Die Prüfung nach 20 minütiger Verweilzeit ergab schließlich einen direkten Vergleich des Aufbaus oder Abbaus der Zusammensetzung in der Schmelze und ließ sich daher beispielsweise auf Verarbeitungsschritte in der Schmelze nach der Compoundierung (z. B. Spritzguss, Heißkanal) übertragen. Dabei war in diesem Fall eine "nicht stabile Schmelze" durch einen Aufbau und damit durch eine Vergrößerung der Schmelzviskosität und damit einhergehend einen kleineren MVR Wert charakterisiert.

### Hydrolyse

Zur Messung der Hydrolysebeständigkeit wurden aus erfindungsgemäßen Formmassen, enthaltend die erfindungsgemäßen Zusammensetzungen, hergestellte Prüfkörper in einem Dampfsterilisator bei 100°C und 100% Feuchtigkeit gelagert. Nach jeweils 15 Tagen Einwirken der Feuchtigkeit (Hydrolyse) wurden die Schlagzähigkeiten der gelagerten Erzeugnisse im Schlagversuch nach ISO 180-1U bei 23°C bestimmt und die Werte gemäß Tabelle 1 ermittelt. Die Schlagzähigkeit wird relativ in Prozent (%) vom Ausganswert angegeben

### Oberfläche

Die Oberfläche wurde begutachtet und visuell an Prüfkörpern der Dimension 60 mm x 60 mm x 2 mm eingeschätzt. Entscheidend für die Beurteilung waren die Kriterien Glanz, Glätte, Farbe und einheitliche Struktur der Oberfläche.

### Edukte

**Komponente a): PBT**, Lineares Polybutylenterephthalat mit einer intrinsischen Viskosität von 93 g/cm³ gemessen in Phenol : 1,2-Dichlorbenzol = 1:1 bei 25°C; (Pocan^{®} B1300, Handelsprodukt der Lanxess Deutschland GmbH, Köln)

**Komponente b)**: Copolymerisat aus Ethen und Acrylsäure-2-ethylhexylester mit einem Ethen-Anteil von 63 Gew.-% und einem MFI von 550 (Lotryl^{®} 37 EH 550 der Arkema Frankreich) [CAS-Nr. 26984-27-0]

**Komponente c1):** Oligomeres Reaktionsprodukt aus Bisphenol A und Epichlorhydrin (siehe Formel (I)), mit einem Epoxidäquivalent-Gewicht (DIN 16945) von 500 bis 700 g/eq und einem Erweichungspunkt (Mettler, DIN 51920) zwischen 75 und 90°C. [CAS Nr. 25068-38-6]

**Komponente c2):** Epoxidiertes Leinsamen Öl (Epoxidgehalt 8-10%). Edenol B 316 Spezial der Firma Emery Oligochemicals, Malaysia

**Komponente d):** Mit silanhaltigen Verbindungen beschlichtete Glasfaser mit einem Durchmesser von 10 µm (CS 7967, Handelsprodukt der Bayer Antwerpen N.V., Antwerpen, Belgien)

**Komponente e):** Methylmethaycrylat / Butylacrylat Copolymer, bestehend aus einem Butyl-Acrylat Kern und einer aufgepfropften MMA Hülle (70/30), Paraloid EXL 3300, DOW Chemical AG, USA.

**Komponente f):** Als weitere Additive wurden die folgenden, für die Verwendung in thermoplastischen Polyestern gebräuchlichen Komponenten eingesetzt:
**Nukleierungsmittel:** Talkum [CAS Nr. 14807-96-6] in Mengen von 0,01 bis 0,55 Massenanteile im Bezug auf 100 Massenteile der Komponente a)
**Thermostabilisator:** Übliche Stabilisatoren auf Basis von Phenylphosphiten in Mengen von 0,01 bis 0,55 Massenanteile in Bezug auf 100 Massenteile der Komponente a)
**Entformungsmittel:** Handelsübliche Fettsäureester in Mengen von 0,1 bis 0,50 Massenanteile in Bezug auf 100 Massenteile der Komponente a)
**Pigmente:** Ruß, organische Farbstoffe jeweils in Mengen von 0 bis 0,85 Massenanteile in Bezug auf 100 Massenteile der Komponente a)

**Tabelle 1**

| | Vergleich 1 | Vergleich 2 | Beispiel 1 | Beispiel 2 | Beispiel 3 |
|---|---|---|---|---|---|
| | | | | | |
| Komponente a) | 100 | 100 | 100 | 100 | 100 |
| Komponente b) | - | | 10 | 10 | 10 |
| Komponente c1) | - | 3 | 3 | 3 | |
| Komponente c2) | | | | | 9 |
| Komponente d) | 43 | 47 | 49 | 52 | 43 |
| Komponente e) | - | 6 | | 7 | |
| Komponente f) | 1 | 1 | 1 | 1 | 1 |
| | | | | | |
| MVR (260°C, 2.16 kg) - 5 min | 17 | 11 | 17 | 13 | 18 |
| MVR (260°C, 2.16 kg) - 20 min | 24 | 8 | 23 | 17 | 19 |
| Schmelzestabilität | ++ | - | ++ | ++ | + |
| Schmelzviskosität 260°C, Eta = 1500s⁻¹ | 138 | 120 | 85 | 90 | n.d. |
| Izod Schlagzähigkeit | n.d | + | + | + | n.d |
| Erhalt der Schlagzähigkeit (Izod) nach 15 d 100°C, 100% Luftfeuchtigkeit | 13 | 42 | 68 | 55 | 55 |
| Oberflächenqualität Farbmusterplatte [60 × 40 × 2 mm] | + | n.d | + | n.d. | n.d. |
| (Mengenangaben in assenantellen) | | | | | |

Die Beispiele 1 und 2 sind Referenzbeispiele.

**Vergleich 1** zeigt die im Rahmen der vorliegenden Erfindung an einem Standard PBT mit 30 Massenanteilen Glasfasern gemessenen Ergebnisse. Die Messungen bestätigten, dass die Schmelzestabilität einer solchen Standard Formmasse aus PBT und 30 Massenanteilen Glasfasern sehr gut (++) ist, sichtbar an der Zunahme des MVRs bei längerer Verweildauer bei 260°C. Als Standard PBT GF 30 wurde Pocan^{®} B3235 der Lanxess Deutschland GmbH, Köln, eingesetzt.

**Vergleich 2** dagegen zeigt, dass die Schmelzestabilität einer Formmasse aus PBT, Glasfasern, einem reaktiven Epoxidharz und einem Schlagzähmodifikator (Acrylat-Copolymer auf Basis eines Methylmethacrylat / Butylacrylat Copolymers) nicht schmelzestabil (--) war. Dies wird deutlich durch die Abnahme des MVRs nach einer Verweilzeit von 20 min bei 260°C im Vergleich zu einer Verweilzeit von 5 min.

Im Vergleich dazu wiesen erfindungsgemäße Formmassen gemäß der Beispiele 1 bis 3 aus a) PBT, b) einem Acrylat-Copolymer auf Basis Ethylhexyl-acrylat und Ethen, c) einem reaktiven Epoxidharz und d) Glasfasern, wiederum sehr gute Schmelzestabilitäten - vergleichbar mit **Vergleich 1** - auf.

Darüber hinaus aber zeigten aus diesen erfindungsgemäßen Formmassen hergestellte Erzeugnisse eine höhere Hydrolysestabilität, als sie Erzeugnisse auf Basis von Formmassen aus den Vergleichsbeispielen 1 und 2 aufwiesen !

Ebenso waren die Ergebnisse der Prüfung der Schmelzviskosität der Beispiele 1 und 2 deutlich geringer, als die Werte der Schmelzviskosität für die Formmassen der Vergleichsbeispiele 1 und 2. Das sehr gute Fließverhalten spiegelte sich dabei in einer niedrigen Schmelzviskosität bzw. Scherviskosität bei hoher Scherrate (1500 s⁻¹), die in etwa der Scherrate während der Verarbeitung entsprach, wider. Die Fließfähigkeit der Formmassen aus den erfindungsgemäßen Zusammensetzungen übertraf dabei die Fließfähigkeit eines Standard PBT GF 30.

Weiterhin waren die mechanischen Eigenschaften (Schlagzähigkeit nach Izod) gemäß ISO 180 von Erzeugnissen auf Basis der erfindungsgemäßen Formmassen und die Oberflächenqualität vergleichbar mit einem Standard PBT aus **Vergleich 1**, das dem Fachmann für gute Eigenschaften in Hinblick auf Oberfläche und Mechanik bekannt ist.

Für den Fachmann überraschend ist in **Beispiel 2** die Tatsache, dass der Zusatz der Komponente b) zu einer in **Vergleich 2** beschriebenen, eigentlich nicht schmelzestabilen Mischung von PBT, trotz allem zu einer guten Schmelzestabilität führte. Weiterhin waren auch hier eine verbesserte Hydrolysestabilität und eine verringerte Schmelzviskosität, verglichen mit **Vergleich 2,** gegeben.

**Beispiel 3** zeigt, dass in einer erfindungsgemäßen Formmasse für ein als Komponente c) einzusetzendes Additiv statt eines Phenol-Epichlorhydrin basierten Epoxidharzes auch andere Epoxidquellen, hier epoxidiertes Leinöl, einsetzbar ist.

**Tabelle 1** zeigt also, dass erfindungsgemäße Zusammensetzungen bzw. Formmassen und daraus herzustellende Erzeugnisse gemäß der **Beispiele 1 bis 3** alle die in der Aufgabenstellung der vorliegenden Erfindung geforderten Anforderungen erfüllten. Die Mischungen von PBT mit den erfindungsgemäß einzusetzenden Kombination der Komponenten b) und c) zeigten hervorragende Schmelzestabilitäten, die Formmassen wiesen exzellentes Fließverhalten auf und daraus hergestellte Erzeugnisse zeichneten sich durch gute Hydrolysebeständigkeit, gute mechanische Eigenschaften und eine gute Oberfläche aus.

## Patentansprüche

1. Zusammensetzungen, Formmassen und Erzeugnisse enthaltend
a) wenigstens ein Polyalkylenterephthalat,
b) wenigstens ein Copolymerisat aus mindestens einem Olefin und mindestens einem Acrylsäureester oder Methacrylsäureester eines aliphatischen Alkohols, wobei der nach ISO 1133 zu bestimmende Melt-Flow-Index des Copolymerisats 50 g / 10 min nicht unterschreitet und dieser bei 190°C und einem Prüfgewicht von 2.16 kg gemessen bzw. bestimmt wird, und
c) wenigstens ein Additiv auf Basis von Molekülen mit 2 oder mehr Epoxid-Gruppen pro Molekül,
wobei es sich um wenigstens ein epoxidiertes natürliches Öl handelt.

2. Zusammensetzungen, Formmassen und Erzeugnisse gemäß Anspruch 1, **dadurch gekennzeichnet, dass** die epoxidierten natürlichen Öle auf wenigstens einem Öl aus der Gruppe Olivenöl, Leinöl, Erdnussöl, Palmöl, Sojabohnenöl und Lebertran basieren, vorzugsweise Leinöl oder Sojabohnenöl, insbesondere Leinöl.

3. Zusammensetzungen, Formmassen und Erzeugnisse gemäß Anspruch 1 oder 2, **dadurch gekennzeichnet dass** als Komponente c) Leinöl oder Sojabohnenöl, insbesondere Leinöl, eingesetzt wird.

4. Zusammensetzungen, Formmassen und Erzeugnisse gemäß Anspruch 2 oder 3, **dadurch gekennzeichnet, dass** das mittlere Molekulargewicht der als Komponente c) einzusetzenden epoxidierten natürlichen Öle im Bereich von 500 bis 1000g/mol liegt und durch matrixunterstützte Laser-Desorptions/lonisations-Flugzeit-Massenspektrometrie gemäß DIN EN ISO 10927 bestimmt wird.

5. Verfahren zur Herstellung von Erzeugnissen, **dadurch gekennzeichnet, dass** man Zusammensetzungen gemäß einem der Ansprüche 1 bis 4 in wenigstens einem Mischaggregat zu Formmassen verarbeitet und diese einer Weiterverarbeitung, vorzugsweise einem Spritzgussverfahren oder einer Extrusion unterzieht.

6. Verwendung wenigstens eines Copolymerisats aus mindestens einem Olefin und mindestens einem Acrylsäureester oder Methacrylsäureester eines aliphatischen Alkohols, wobei der nach ISO 1133 zu bestimmende Melt-Flow-Index (MFI) des Copolymerisats 50 g /10 min nicht unterschreitet und dieser bei 190°C und einem Prüfgewicht von 2.16 kg gemessen bzw. bestimmt wird, und wenigstens eines Additivs auf Basis von Molekülen mit 2 oder mehr Epoxid-Gruppen pro Molekül, wobei es sich wenigstens um ein epoxidiertes Öl handelt.

## Claims

1. Compositions, moulding materials and articles of manufacture containing
a) at least one polyalkylene terephthalate,
b) at least one copolymer of at least one olefin and at least one acrylic ester or methacrylic ester of an aliphatic alcohol, wherein the melt flow index according to ISO 1133 of the copolymer is not less than 50 g/10 min and said index is measured/determined at 190°C and a test weight of 2.16 kg, and
c) at least one additive based on molecules having 2 or more epoxy groups per molecule, wherein said additive is
at least one epoxidized natural oil.

2. Compositions, moulding materials and articles of manufacture according to Claim 1, **characterized in that** the epoxidized natural oils are based on at least one oil from the group of olive oil, linseed oil, peanut oil, palm oil, soybean oil and cod liver oil.

3. Compositions, moulding materials and articles of manufacture according to Claim 1 or 2, **characterized in that** as component c) linseed oil or soybean oil, in particular linseed oil, is employed.

4. Compositions, moulding materials and articles of manufacture according to Claim 2 or 3, **characterized in that** the average molecular weight of the epoxidized natural oils employable as component c) is in the range from 500 to 1000 g/mol and is determined by matrix-assisted laser desorption/ionization time-of-flight mass spectrometry according to DIN EN ISO 10927.

5. Process for producing articles of manufacture, **characterized in that** it comprises processing compositions according to any of Claims 1 to 4 in at least one mixing assembly to afford moulding materials and subjecting these to further processing, preferably to an injection moulding process or an extrusion.

6. Use of at least one copolymer of at least one olefin and at least one acrylic ester or methacrylic ester of an aliphatic alcohol, wherein the melt flow index (MFI) according to ISO 1133 of the copolymer is not less than 50 g/10 min and said index is measured/determined at 190°C and a test weight of 2.16 kg, and at least one additive based on molecules having 2 or more epoxy groups per molecule, wherein said additive is at least one epoxidized natural oil, for producing polyalkylene terephthalate-based compositions, moulding materials or articles of manufacture.

## Revendications

1. Compositions, masses de moulage et produits contenant
a) au moins un poly(téréphtalate d'alkylène),
b) au moins un copolymère constitué par au moins une oléfine et au moins un ester d'acide acrylique ou ester d'acide méthacrylique d'un alcool aliphatique, l'indice de fluidité à chaud, à déterminer selon la norme ISO 1133, du copolymère ne descendant pas sous 50 g/10 min et celui-ci étant mesuré ou déterminé à 190°C et sous un poids de test de 2,16 kg et
c) au moins un additif à base de molécules comprenant 2 groupes époxyde ou plus par molécule, où il s'agit d'au moins une huile naturelle époxydée.

2. Compositions, masses de moulage et produits selon la revendication 1, **caractérisés en ce que** les huiles naturelles époxydées sont à base d'au moins une huile du groupe huile d'olive, huile de lin, huile d'arachide, huile de palme, huile de germes de soja et huile de foie de morue.

3. Compositions, masses de moulage et produits selon la revendication 1 ou 2, **caractérisés en ce qu'**on utilise, comme composant c), de l'huile de lin ou de l'huile de germes de soja, en particulier de l'huile de lin.

4. Compositions, masses de moulage et produits selon la revendication 2 ou 3, **caractérisés en ce que** le poids moléculaire moyen des huiles naturelles époxydées à utiliser comme composant c) se situe dans la plage de 500 à 1000 g/mole et est déterminé par spectrométrie de masse, à temps de vol, après désorption/ionisation laser assistée par matrice selon la norme DIN EN ISO 10927.

5. Procédé pour la fabrication d'objets, **caractérisé en ce qu'**on transforme des compositions selon l'une des revendications 1 à 4 dans au moins un appareil de mélange en masses de moulage et on soumet celles-ci à une transformation ultérieure, de préférence à un procédé de moulage par injection ou à une extrusion.

6. Utilisation d'au moins un copolymère constitué par au moins une oléfine et au moins un ester d'acide acrylique ou ester d'acide méthacrylique d'un alcool aliphatique, l'indice de fluidité à chaud, à déterminer selon la norme ISO 1133, du copolymère ne descendant pas sous 50 g/10 min et celui-ci étant mesuré ou déterminé à 190°C et sous un poids de test de 2,16 kg et d'au moins un additif à base de molécules comprenant 2 groupes époxyde ou plus par molécule, où il s'agit d'au moins une huile naturelle époxydée, pour la préparation de compositions, de masses de moulage ou de produits à base de poly(téréphtalate d'éthylène).
